# EUROPÄISCHE PATENTSCHRIFT

(11) **EP 1 711 309 B1**
(45) Veröffentlichungstag und Bekanntmachung des Hinweises auf die Patenterteilung: **02.04.2008**
(21) Anmeldenummer: 05736442.4
(22) Anmeldetag: 06.05.2005
(51) Int. Cl.: B23Q 39/02, B23Q 11/00, B23B 3/30, B23Q 39/04

(54) **DREHMASCHINE MIT ZWEI VERFAHRBAREN ARBEITSSPINDELN**
LATHE COMPRISING TWO MOBILE WORKING SPINDLES
TOUR PRESENTANT DEUX BROCHES DE TRAVAIL MOBILES

(30) Priorität: 07.05.2004 DE 102004022649
(43) Veröffentlichungstag der Anmeldung: 18.10.2006
(73) Patentinhaber: Prahler, Ralf, 29481 Karwitz (DE)
(72) Erfinder: Prahler, Ralf, 29481 Karwitz (DE)
(74) Vertreter: von Eichel-Streiber, Caspar
(86) Internationale Anmeldenummer: PCT/EP2005/004952
(87) Internationale Veröffentlichungsnummer: WO 2005/110674

(56) Entgegenhaltungen:
- EP-A- 0 885 686
- EP-A- 1 216 789
- WO-A-01/53033
- DE-A1- 4 136 916
- DE-A1- 4 430 389

## Beschreibung

Die Erfindung betrifft eine Drehmaschine nach dem Oberbegriff des Anspruchs 1, wie sie aus der EP 1 216 789 bekannt ist.

Nachteilig an diesen vorbekannten Maschinen ist der Umstand, dass Aufnahme des rohen Werkstücks bzw. Ablage des bearbeiteten Werkstücks zu Lasten der Hauptzeit der Maschine gehen, d.h. dass der Zyklus Aufnahme des rohen Werkstücks/Bearbeitung des Werkstücks/Ablage des fertigen Werkstücks zeitlich nacheinander erfolgt und somit recht lang ist.

Aufgabe der vorliegenden Erfindung ist, diesen Zyklus zeitlich zu verkürzen.

Die erfindungsgemäße Aufgabe wird durch die Drehmaschine gemäß Anspruch 1 gelöst. Eine Weiterverbesserung der erfindungsgemäßen Drehmaschine nach Anspruch 1 ist in Anspruch 2 beschrieben. Die nachfolgenden Ausführungsformen gemäß Ansprüchen 3 bis 5 betreffen weitere vorteilhafte Ausgestaltungen der Erfindung.

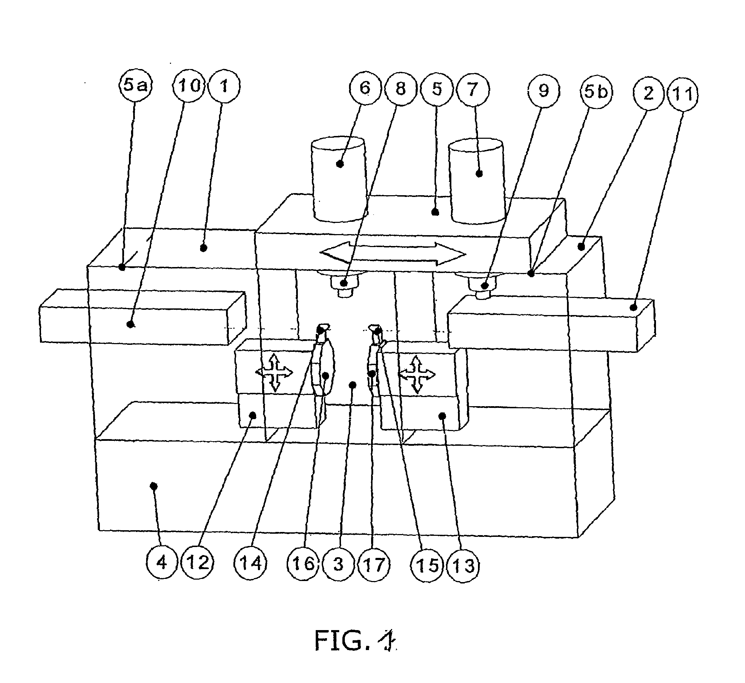

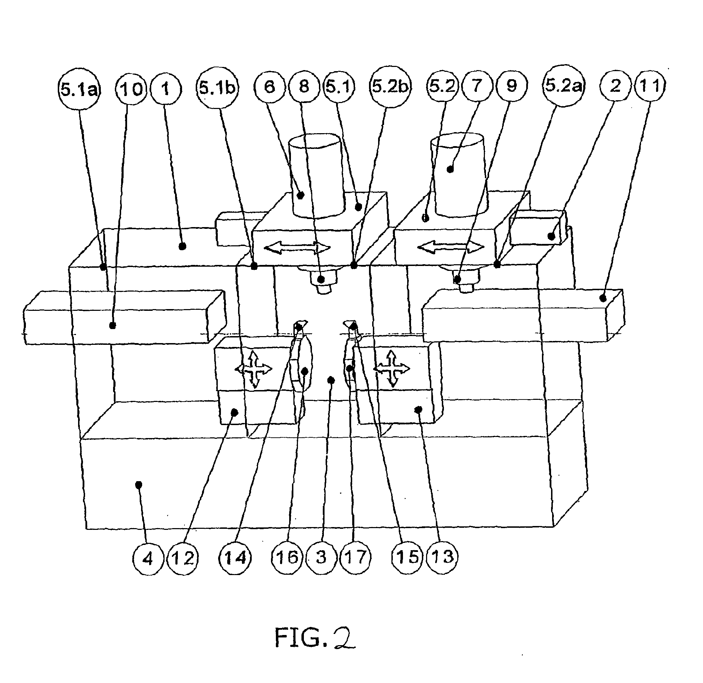

Die Erfindung wird anhand der beiliegenden Figuren 1 und 2 näher erläutert; hierbei wird jeweils eine bevorzugte Ausführungsform der erfindungsgemäßen Drehmaschine schematisch dargestellt.

Die erfindungsgemäße Drehmaschine gemäß Fig.1 weist ein Maschinengestell 4 auf, das gegebenenfalls geneigt angeordnet sein kann, auf dem zwei sich gegenüberliegende Werkzeugrevolver 12, 13 mit zugehörigen Werkzeugen 14, 15 auf den Revolverscheiben 16, 17, zwei seitlich neben den Werkzeugrevolvern 12, 13 sich gegenüberliegende Be-/Entladevorrichtungen 10, 11 mit einem zwischen zwei Haltepositionen 5a, 5b hin und her fahrendem Schlitten 5 mit zwei benachbart auf diesen angeordneten Spindeln 6, 7 mit Spannfuttern 8, 9 zur Aufnahme jeweils eines Werkstücks angeordnet sind.

Der Schlitten 5 bewegt sich zwischen den beiden Haltepositionen 5a und 5b, wobei sich in der Halteposition 5a die Spindel 6 zum Be- oder Entladen in der Be-/Entladevorrichtung 10 und die Spindel 7 im Bearbeitungsraum 3 befindet, während sich in Halteposition 5b die Spindel 7 zum Be- oder Entladen in der Be-/Entladevorrichtung 11 und die Spindel 6 mit dem Werkstück 8 im Bearbeitungsraum 3 befindet.

Die Werkzeugrevolver 12, 13 sind zur Bearbeitung des Werkstücks 8 im Spannfutter der Spindel 6 in an sich bekannter Weise zu mehrachsigen Vorschub- bzw. Hubbewegungen in beliebigen Richtungen ausgebildet.

Die Ausführungsform gemäß Fig. 2 weist zwei Schlitten 5.1 und 5.2 mit jeweils einer Spindel 6 bzw. 7 auf, die unterschiedlich bezüglich möglicherweise unterschiedlicher Wegstrecken 5a-5a1 bzw. 5b-5b1 der Schlitten 5.1 bzw. 5.2 und/oder unterschiedlicher Geschwindigkeiten dieser Schlitten angesteuert werden.

Die erfindungsgemäße Drehmaschine erlaubt, den geschilderten Fertigstellungszyklus zeitlich dadurch erheblich zu verkürzen, dass die Ablage eines bearbeiteten Werkstücks und die Wiederaufnahme eines unbearbeiteten oder erst teilweise bearbeiteten Werkstücks zeitgleich mit der Bearbeitung des im Bearbeitungsraum 3 befindlichen Werkstücks stattfindet.

Verstärkt wird diese Wirkung durch den Umstand, dass im Arbeitsraum 3 mehrere, bevorzugt zwei sich gegenüberliegende Werkzeugrevolver 12, 13 mit zugehörigen Werkzeugen 14, 15, die gleich oder verschieden sein können, angeordnet sind. Anstelle von Werkzeugrevolvern können andere, an sich bekannte Werkzeugträger eingesetzt werden.

Die Steuerung der erfindungsgemäßen Drehmaschine erfolgt durch Implementieren handelsüblicher CNC-Steuerungen.

## Patentansprüche

1. Drehmaschine mit zwei Arbeitsspindeln (6, 7) mit jeweils einer Aufnahmevorrichtung (8, 9) für ein Werkstück und mit mindestens zwei Werkzeugträgern (12, 13) in einem Bearbeitungsraum (3), zur Aufnahme verschiedener Bearbeitungswerkzeuge wobei die werkzeugträger zu mehrachsigen Vorschub- bzw. Hubbewegungen in beliebigen Richtungen ausgebildet sind und wobei die Arbeitsspindeln (6, 7) auf mindestens einem hin und her bewegbaren Schiebeschlitten (5) angeordnet sind, **dadurch gekennzeichnet, dass** der mindestens eine Schiebeschlitten in einer ersten Halteposition (5a) die erste Spindel (6) in eine erste Be-/Entladevorrichtung (10) und die zweite Spindel (7) in den Bearbeitungsraum (3) führt, während er in der zweiten Halteposition (5b) die erste Spindel (6) in dem Bearbeitungsraum (3) und die zweite Spindel (7) in eine zweite Be-/Entladevorrichtung (11) führt, und dass die mindestens zwei Werkzeugträger (12, 13) zur mit dem Be-/Entladen zeitgleichen Bearbeitung eines Werkstücks angeordnet sind.

2. Drehmaschine nach Anspruch 1, **dadurch gekennzeichnet, dass** die Werkzeugträger (12, 13) in dem Bearbeitungsraum (3) zwei sich gegenüberliegende Werkzeugrevolver mit zugehörigen Revolverscheiben (16, 17) mit Werkzeug (14, 15) zur Bearbeitung des mit einer der Spindeln (6, 7) in den Bearbeitungsraum (3) eingeführten Werkstücks (1, 2) sind.

3. Drehmaschine nach mindestens einem der vorhergehenden Ansprüche, **dadurch gekennzeichnet, dass** das Maschinengestell, auf dem die Drehmaschine aufgebaut bzw. angeordnet ist, zur Erleichterung der Abfuhr der im Bearbeitungsraum (3) anfallenden Späne geneigt ausgeführt ist.

4. Drehmaschine nach mindestens einem der vorhergehenden Ansprüche, **dadurch gekennzeichnet, dass** die Spindeln (6, 7) in dem Schiebeschlitten (5) horizontal angeordnet sind.

5. Drehmaschine nach mindestens einem der vorhergehenden Ansprüche, **dadurch gekennzeichnet, dass** die Spindel (6) auf einem ersten Schlitten (5.1) und die Spindel (7) auf einem zweiten Schlitten (5.2) angeordnet ist.

## Claims

1. Lathe having two work spindles (6, 7) with in each case a holding fixture (8, 9) for a workpiece and having at least two tool carriers (12,13) in a machining area (3) for holding different machining tools, said tool carriers being constructed for multiaxial feed or lift movements in random directions and in which the work spindles (6, 7) are placed on at least one reciprocatable sliding carriage (5), **characterized in that** the at least one sliding carriage in a first retaining position (5a) guides the first spindle (6) into a first loading/unloading device (10) and the second spindle (7) into machining area (3), whilst in the second retaining position (5b) it guides the first spindle (6) in the machining area (3) and the second spindle (7) into a second loading/unloading device (11), and that the at least two tool carriers (12, 13) are positioned for with the loading/unloading simultaneous machining of a workpiece.

2. Lathe according to claim 1, **characterized in that** the tool carriers (12, 13) in the machining area (3) are two facing turrets with associated turret disks (16, 17) with the tool (14, 15) for machining the workpiece (1, 2) introduced with one of the spindles (6, 7) into the machining area (3).

3. Lathe according to at least one of the preceding claims, **characterized in that** the machine frame on which the lathe is set up or placed, is inclined to facilitate the removal of the chips dropping into the machining area (3).

4. Lathe according to at least one of the preceding claims, **characterized in that** the spindles (6, 7) are horizontally positioned in the sliding carriage (5).

5. Lathe according to at least one of the preceding claims, **characterized in that** the spindle (6) is placed on a first carriage (5.1) and the spindle (7) on a second carriage (5.2).

## Revendications

1. Machine de tournage comprenant deux broches de travail (6, 7) comportant un dispositif respectif (8, 9) de réception d'une pièce à usiner, et au moins deux porte-outils (12, 13) situés dans un espace d'usinage (3) en vue de recevoir différents outils d'usinage, sachant que lesdits porte-outils sont conçus pour accomplir des mouvements respectifs d'avance ou de levage selon plusieurs axes, dans des directions quelconques, et sachant que les broches de travail (6, 7) sont implantées sur au moins un chariot coulissant (5) pouvant effectuer des va-et-vient, **caractérisée par le fait que**, dans une première position d'arrêt (5a), le chariot coulissant prévu au minimum insère la première broche (6) dans un premier dispositif (10) de chargement/déchargement et la seconde broche (7) dans l'espace d'usinage (3), tandis que, dans la seconde position d'arrêt (5b), il insère ladite première broche (6) dans ledit espace d'usinage (3) et ladite seconde broche (7) dans un second dispositif (11) de chargement/déchargement, et **par le fait que** les deux porte-outils (12, 13), prévus au minimum, sont agencés en vue de l'usinage d'une pièce en concomitance avec le chargement/le déchargement.

2. Machine de tournage selon la revendication 1, **caractérisée par le fait que** les porte-outils (12, 13), situés dans l'espace d'usinage (3), se présentent comme deux tourelles situées en vis-à-vis et comportant des disques revolvers (16, 17) associés, munis d'un outil (14, 15) en vue de l'usinage de la pièce (1, 2) engagée, par l'une des broches (6, 7), dans ledit espace d'usinage (3).

3. Machine de tournage selon au moins l'une des revendications précédentes, **caractérisée par le fait que** le bâti, sur lequel ladite machine de tournage est respectivement montée ou disposée, est de réalisation inclinée afin de faciliter l'évacuation des copeaux se présentant dans l'espace d'usinage (3).

4. Machine de tournage selon au moins l'une des revendications précédentes, **caractérisée par le fait que** les broches (6, 7) sont placées horizontalement dans le chariot coulissant (5).

5. Machine de tournage selon au moins l'une des revendications précédentes, **caractérisée par le fait que** la broche (6) se trouve sur un premier chariot (5.1), et la broche (7) se trouve sur un second chariot (5.2).
